# EUROPEAN PATENT SPECIFICATION

(11) **EP 1 813 008 B1**
(45) Date of publication and mention of the grant of the patent: **01.02.2017**
(21) Application number: 05856538.3
(22) Date of filing: 13.10.2005
(51) Int. Cl.: H02K 1/30, D06F 37/40, D06F 37/30, H02K 1/27, H02K 5/173, H02K 7/08, H02K 7/14, H02K 1/32, H02K 9/06

(54) **A MOTOR IN WHICH AN ELECTRIC LEAKAGE TO A SHAFT IS PREVENTED**
MOTOR, IN DEM EINE ELEKTRISCHE ABLEITUNG ZU EINER ACHSE VERHINDERT IST
MOTEUR DANS LEQUEL UNE FUITE ÉLECTRIQUE VERS L'ARBRE EST INTERDITE

(30) Priority: 19.11.2004 KR 20040095069; 19.11.2004 KR 20040095068; 19.11.2004 KR 20040095070; 25.11.2004 KR 20040097546
(43) Date of publication of application: 01.08.2007
(73) Proprietor: LG Electronics Inc., Seoul 150-721 (KR)
(72) Inventor: Ahn, Ingeun, Gyeongsangnam-do 641-745 (KR); Park, Yong Suck, Gyeongsangnam-do 641-745 (KR); Jung, Youn Su, Gyeongsangnam-do 641-756 (KR); Kang, Dong Woo, Changwon-si, Gyeongsangnam-do 641-752 (KR)
(74) Representative: Vossius & Partner Patentanwälte Rechtsanwälte mbB
(86) International application number: PCT/KR2005/003409
(87) International publication number: WO 2006/080759

(56) References cited:
- EP-A2- 1 548 171
- GB-A- 2 401 412
- KR-A- 20020 085 413
- US-A- 5 907 206
- US-A- 6 049 930
- US-A1- 2004 070 297

## Description

### Technical Field

The present invention relates to motors each having a rotor with a metal rotor frame, a metal rotation shaft, and a rotation shaft supporting member connected between the rotor frame and the rotation shaft for transmitting a rotating power from the rotor to the rotation shaft, and, more particularly, to a motor in which the rotation shaft supporting member is constructed of a metal and an insulating material, for insulating the rotation shaft from the rotor frame while enhancing a structural strength of the rotation shaft supporting member.

### Background Art

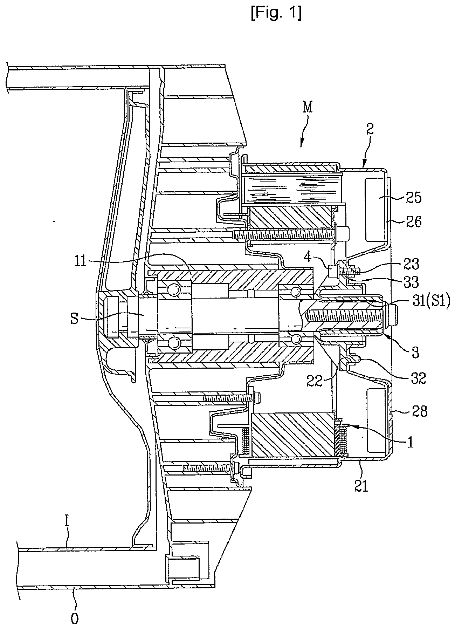

FIG. 1 illustrates a structural diagram of a drum type washing machine having a related art motor applied thereto, wherein the motor in FIG. 1 is a direct coupling type motor having a rotation shaft thereof used as a washing shaft directly for rotating an inner tub of a washing machine directly. In such a direct coupling type motor for a washing machine, a supporting member for supporting the washing shaft is a washing shaft supporting member.

As shown, the drum type washing machine is provided with an inner tub 'I'and an outer tub 'O'for washing dirty laundry clean, a washing shaft 'S'having a serration 'S1'at a rear end for transmission of a rotating power to rotate the inner tub 'I'in regular/reverse direction for washing the laundry, and a motor 'M'for generating the rotating power and transmitting to the washing shaft'S'

The motor 'M'is provided with a stator 1 fastened, and secured to a rear wall portion of the outer tub having a bearing supporting portion 11 formed as one body therewith, with bearings 'B'mounted therein, a rotor 2 mounted on an outer side of the stator 1 for rotating by a difference of polarities, having a rotor frame 21 with coupling holes 22 and fastening holes 23 at a center at predetermined intervals, and a plurality of vent holes 26 in a bottom surface, and a washing shaft supporting member 3 having coupling projections 32 and fastening holes 33 at predetermined intervals in correspondence to the coupling holes 22 in the rotor frame 21 in a bottom surface, and a serration 31 therein, for transmission of a rotating power from the rotor 2 to the washing shaft 'S' and maintaining a gap between the bearing supporting portion 11 and the rotor frame 21.

The operation of the related art motor will be described.

Upon applying a power to the stator 1, the motor 'M' rotates by a rotating power generated by an electromagnetic action between the stator and rotor, as well as the washing shaft supporting member 3 coupled, and secured to the rotor frame 21 of the rotor 2, and at the same time with this, the inner tub 'I' coupled to an upper portion of the washing shaft 'S'also rotates upon reception of the rotation power transmitted from the rotor 2 to the washing shaft 'S' by the serrations 31, and 'S1' in the washing shaft supporting member 3 and at a lower portion of the washing shaft 'S'

In this instance, because the washing shaft supporting member 3 between the bearing supporting portion 11 and the rotor frame 21 is formed of an insulating resin, no current flows to the washing shaft 'S'even in a case insulation of a coil portion of the stator 'I' and/or the rotor frame 21 of the rotor 2 is broken, to prevent the current from flowing to the washing water held in the outer tub 'O' thereby preventing accident caused by negligence of safety from occurring.

Moreover, the washing shaft supporting member 3 reduces vibration from the motor 'M' to the washing shaft 'S', the washing shaft supporting member 3 reduces vibration and noise of the outer tub.

However, the related art washing shaft supporting member of resin has a poor durability in view of strength.

That is, in a case the washing shaft supporting member is only formed of resin simply, though the washing shaft supporting member is favorable in view of an insulating performance and reduction of vibration compared to a case the washing shaft supporting member is only formed of a metal, the washing shaft supporting member is not favorable in view of durability due to poor strength of the component.

Moreover, in the case the washing shaft supporting member is only formed of resin, formed portions thereof become thick excessively, to require a long time period in cooling down after injection molding, and cause a difference of cooling speeds between the formed portions, resulting in difficulty in accurate formation of the washing shaft supporting member.

US-A-5 907 206 discloses a rotor for an electric motor including a plurality of annularly disposed rotor magnets, a frame made of a steel plate and having an annular wall disposed outside the annularly disposed rotor magnets so as to be located at a side opposed to the stator with respect to the rotor magnets, the annular wall having an open end, a ring member made of a magnetic material and disposed along the annular wall of the frame at an inner or outer circumferential side of the annular wall, and a resin molded member comprising a resin for integrating the rotor magnets, the frame and the ring member together.

In US-A-6 049 930, a washing machine including a rotatable tub in which an agitator is disposed is described, wherein a tub shaft connected to the rotatable tub is mounted on a base for rotation, a clutch is mounted on the tub shaft to be reciprocally moved so that the clutch engages a clutch engagement hole of the base and an engagement protrusion of a motor rotor alternately, and an operation lever mounted on the base is operated so that the clutch is reciprocally moved.

### Disclosure of Invention

### Technical Problem

An object of the present invention is to provide a motor which can cut off a current from flowing to a rotation shaft-a washing shaft in a case of a direct coupling type motor for a washing machine-even if an insulation between a stator coil portion and a rotor frame of a rotor of the motor is broken, to prevent accidents caused by negligence of safety from occurring, can prevent motor vibration from transmission to the washing shaft effectively, and can improve durability of a rotation shaft supporting member-a washing shaft supporting member in a case of a direct coupling type motor for a washing machine.

### Technical Solution

The object of the present invention can be achieved by providing a motor for preventing current leakage to a rotation shaft as defined according to claim 1, having a rotor with a rotor frame of metal, a rotation shaft of metal, and a rotation shaft supporting member connected between the rotor frame and the rotation shaft to transmit a rotation power from the rotor to the rotation shaft, wherein the rotation shaft supporting member includes a supporting portion of metal for receiving and supporting the rotation shaft, and an insulating portion for electric insulation between the rotor frame and the rotation shaft. The insulating portion electrically insulates a portion of the rotation shaft which receives the supporting portion from the supporting portion, to electrically insulate the rotation shaft from the rotor frame.

If the motor of the present invention is a direct coupling type motor in a washing machine, the rotation shaft is connected to the washing shaft directly, or formed as one body with the washing shaft, when the rotation shaft supporting member is a washing shaft supporting member.

The insulating portion may be formed as one body with the rotation shaft or the supporting portion, by insert molding process with the rotation shaft or the supporting portion as an insert in the mold.

The rotation shaft supporting member further includes a fastening portion for being fastened to the rotor frame, wherein the fastening portion is preferably extended from the supporting portion in a radial direction and folded in a circumferential direction.

Preferably, the rotor frame has coupling holes, and the fastening portion has coupling projections for placing in the coupling holes respectively, for guiding coupling between the rotor frame and the fastening portion, and helping the fastening.

The insulating portion may be provided in a tube shape between the rotation shaft and a corresponding portion of the supporting portion.

The insulating portion has an inside circumferential surface and an outside circumferential surface each with a serrate section, the rotation shaft has an outside circumferential surface with a serrate section in correspondence to the serrate section on the inside surface of the insulating portion, and the supporting portion has an inside circumferential surface also with a serrate section in correspondence to the serrate section on the outside circumferential surface of the insulating portion.

According to another aspect, the present invention provides a motor as defined according to claim 9, wherein the rotation shaft is electrically insulated from the rotor frame as the insulating portion insulates the supporting portion from the rotor frame.

The insulating portion can be made of plastic and positioned between the supporting portion and the rotor frame, as one body with the supporting portion by being formed around the supporting portion by insert molding process with the supporting portion as an insert in the mold.

Alternatively, the insulating portion can be formed as a separate piece and assembled to the supporting portion.

If the insulating portion is assembled to the supporting portion, preferably the supporting portion has mounting holes and the insulating portion has mounting projections in conformity with the mounting holes. The mounting holes and the mounting projections guide mounting of the insulating portion onto the supporting portion, and help coupling of the two.

The coupling between the rotation shaft supporting member and the rotor frame is made by coupling between the supporting portion and the rotor frame, for enhancing a coupling strength.

If the fastening member is bolts of metal, because a current can flow between the rotor frame and the supporting portion through the bolts, it is preferable that the insulating portion further prevents the current from flowing.

For this, the insulating portion may be formed to cover an inside surface of the through-passed hole formed in the rotor frame for fastening the bolt, or an inside surface of the through-passed hole in the supporting portion for fastening the bolt, thereby preventing the current from flowing between the rotor frame and the supporting portion. If required, it is preferable that an insulating washer is provided between a head of the bolt and the supporting portion, for electric insulation.

However, the current flow can also be prevented by using, not the metal bolt, but a fastening member having an electric insulating property in coupling the rotation shaft supporting member to the rotor frame. The fastening member having an electric insulating property may be a bolt of a material having an insulating property, such as plastic or resin, or preferably, the material having an insulating property, such as plastic, may be coated on a metal bolt.

In a case the electric insulation between the rotation shaft and the rotor frame is achieved by electrically insulating the supporting portion from the rotor frame with the insulating portion, preferably, the insulating portion has coupling projections, and the rotor frame has coupling holes in correspondence to the coupling projections.

### Advantageous Effects

The present invention permits to prevent accidents caused by negligence of safety from occurring by insulating between a rotor frame and a rotation shaft-a washing shaft in a case of a direct coupling motor in a washing machine-, to cut off transmission of a current to the rotation shaft even if an insulation between a coil portion of a stator and the rotor frame of the rotor in a motor is broken.

Moreover, the supporting member of metal and the folded structure of the fastening portion permit to enhance strength and rigidity of the washing shaft supporting member while saving material.

In the meantime, the reduction of vibration of the rotor frame owing to the insulating portion permits to reduce vibration and noise, to improve reliability of user on the product.

### Brief Description of the Drawings

FIG. 1 illustrates a driving unit in a washing machine having a related art motor applied thereto;
FIG. 2 illustrates a first preferred embodiment of the present invention;
FIG. 3 illustrates an enlarged view of the 'A'part in FIG. 2;
FIG. 4 illustrates a perspective view of the metal supporting portion in FIG. 3;
FIG. 5 illustrates a second preferred embodiment of the present invention;
FIG. 6 illustrates a perspective view of the insulating portion in FIG. 5;
FIG. 7 illustrates a third preferred embodiment of the present invention;
FIG. 8 illustrates an enlarged view of the 'A' part in FIG. 7;
FIG. 9 illustrates a fourth preferred embodiment of the present invention;
FIG. 10 illustrates a fifth preferred embodiment of the present invention;
FIG. 11 illustrates a sixth preferred embodiment of the present invention;
FIG. 12 illustrates an enlarged view of the 'A'part in FIG. 11;
FIG. 13 illustrates a seventh preferred embodiment of the present invention; and
FIG. 14 illustrates an enlarged view of the 'A'part in FIG. 13.

### Best Mode for Carrying Out the Invention

As one of preferred embodiments of the present invention, an embodiment in which a motor is applied to a drum type washing machine to constitute a direct coupling type motor in a washing machine will be described in detail.

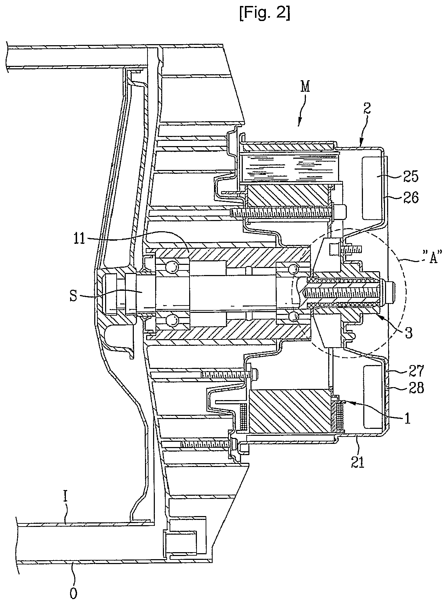

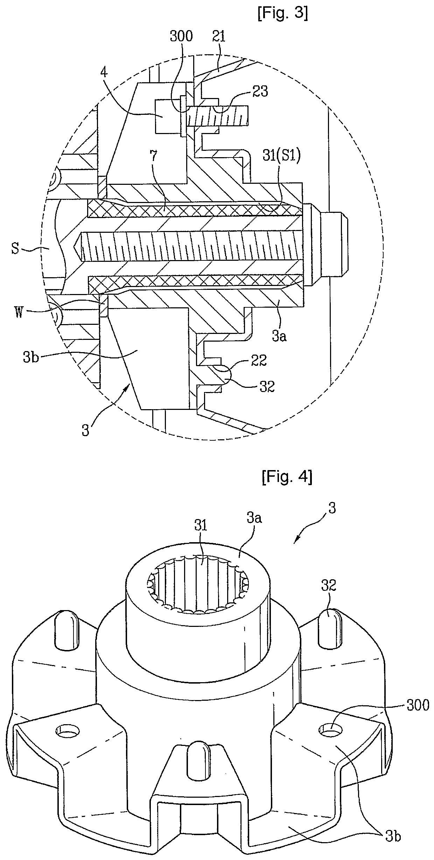

FIG. 2 illustrates a first preferred embodiment of the present invention, and FIG. 3 illustrates an enlarged view of the 'A'part in FIG. 2.

As shown, a driving unit of a drum type washing machine applied to the present invention includes a washing shaft 'S' having a serration 'S1' at a rear end portion for transmission of rotating power to an inner tub 'I' and a motor 'M' for generating and transmitting the rotating power to the washing shaft'S'

Referring to FIGS. 2 and 3, the motor 'M' includes a stator 1 secured to an outer tub 'O' (see FIG. 1), having a bearing supporting portion 11 with bearings 'B' mounted therein, a rotor 2 mounted on an outer side of the stator 1 for rotating by a difference of polarities, having a rotor frame 21 with coupling holes 22 and fastening holes 23 at predetermined intervals, a hub portion projected from a center, a plurality of vent holes 26 and cooling fans 25 in a bottom surface, and reinforcing ridges 27 with a drain hole therebetween, and a washing shaft supporting member 3 for maintaining a gap between the bearing supporting portion 11 and the rotor frame 21. The washing shaft supporting member 3 and the rotor frame 21 are coupled with fastening members 4.

The washing shaft supporting member 3 includes a supporting portion 3a of metal having a serration 31 therein, a coupling portion 3b extended in a radial direction from the supporting portion, and an insulator 7 which is an insulating portion for electric insulation between the washing shaft 'S' and the supporting portion 3a.

Referring to FIG. 3, the insulator 7, the insulating portion, is formed of an insulating material, such as plastic or resin, and may be formed as one body with the washing shaft or the supporting portion 3a by insert molding process.

The insulator 7 is formed over an adequate area of the washing shaft 'S' along a length direction for insulation at a coupling portion of the shaft.

There is an insulating washer 'W'between the washing shaft supporting member 3 and the bearing 'B' at a rear side of the washing shaft for preventing contact between the bearing and the washing shaft supporting member.

The supporting portion 3a is made of metal, such as aluminum, and the coupling portion 3b is extended in a radial direction from the supporting portion 3a, and may have a bent structure which has an upward facing surface and a downward facing surface along a circumferential direction repeatedly.

The supporting portion 3a has the serration 31 for joining with the insulator 7 which is an insulating portion, and the coupling portion 3b has coupling projections 32 toward the rotor frame 21.

In the meantime, the rotor frame 21 has coupling holes 22 in correspondence to the coupling projections 32 on the washing shaft supporting member 3, and fastening holes 23 in correspondence to holes 300 in the washing shaft supporting member 3.

The washing shaft supporting member 3 has substantially a disk shape in a plan view, but the shape is not limited to this.

The operation of the motor will be described.

The washing shaft supporting member 3 is coupled to the rotor frame by making the fastening members 4 pass through the holes 300 in the washing shaft supporting member 3 and fastened to the fastening holes 23 in the rotor frame in a state where the coupling projections 32 are ready to be inserted in the coupling holes 22 in the rotor frame 21.

The folded shape of the coupling portion of the washing shaft supporting member 3 enables to reduce material waste, and the supporting portion 3a of metal enables to enhance rigidity and strength of the washing shaft supporting member 3 in comparison to the related art washing shaft supporting member of plastic or resin.

In the meantime, referring to FIG. 2, the formation of the insulator, an insulating material, as one body with the washing shaft 'S' at a portion thereof to couple with the washing shaft supporting member at an adequate length prevents a current from flowing to the washing shaft 'S'even if the current flows to the rotor frame 21.

Even if the current flows to the rotor frame 21 due to breakage of insulation at the coil portion of the stator 1 and the rotor frame 21 of the rotor 2, the formation of the insulator, an insulating material, as one body with the washing shaft 'S' at a portion thereof to couple with the washing shaft supporting member 3 coupled to the rotor frame 21, to cut off electric connection between the washing shaft supporting member 3 and the shaft S , allows no more transmission of the current to the washing shaft, thereby preventing accidents caused by negligence of safety from occurring in advance.

Moreover, at the time vibration transmits from the motor 'M'to the washing shaft S , the insulator, an insulating portion, damps down the vibration, to reduce intensity of the vibration and noise, effectively.

Since the plurality of vent holes 26 and cooling fans 25 at a bottom surface of the rotor frame 21, the vent holes 26 are naturally formed as the cooling fans 25 are formed by bending relevant portions of the botton surface in a vertical direction, cool down heat of the motor 'M' a performance of the motor 'M' can be improved, and a lifetime of the motor 'M'can be extended because the driving unit can have a cooling effect much better than the cooling scheme relying only on the vent holes 26 in the related art.

The reinforcing ridges 27 between the vent holes 26 and the cooling fans 25, with drain holes 28 therein, enable to drain the washing water dropped onto the rotor frame 21 collected at the reinforcing ridges 27, through the drain hole 28.

The drain of the washing water dropped onto the rotor frame 21 to an outside of the washing machine enables to prevent defective operation of the motor 'M' caused by in-filtration of the washing water vaporized by a temperature of the motor 'M'into the motor 'M' thereby permitting to maintain a washing performance of the washing machine at an optimum state.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

That is, though the insulator 7 can be formed as one body with the washing shaft by insert molding process, other methods of formation are also applicable.

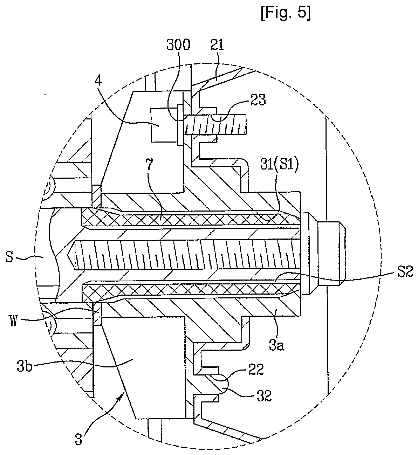

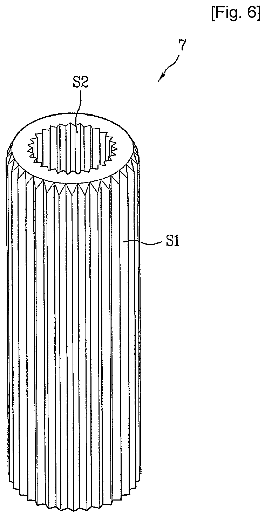

For an example, referring to FIGS. 5 and 6, the insulator 7 may be formed in a tube shape with the serration S1 on an outside circumferential surface as a separate piece, and press fit into the shaft joining portion of the washing shaft 'S'

Of course, it is preferable that the insulator of the tube shape to be inserted on the outside circumferential surface of the washing shaft 'S'also has serration S2 on an inside circumferential surface for preventing the insulator from idling.

In the meantime, if the insulator 7, the insulating portion, is formed throughout an entire length of the washing shaft, the insulating washer 'W'may be emitted.

### [Mode for Invention]

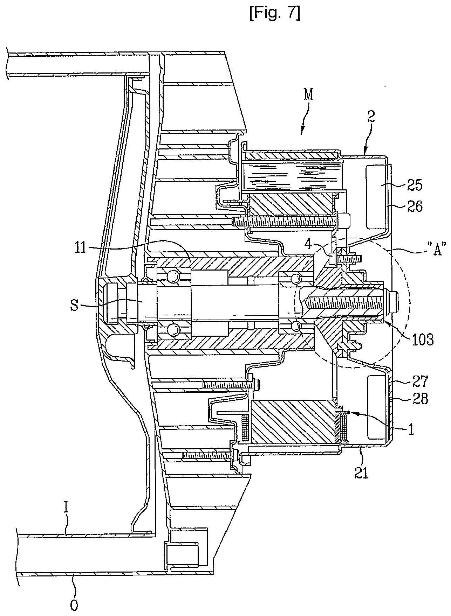

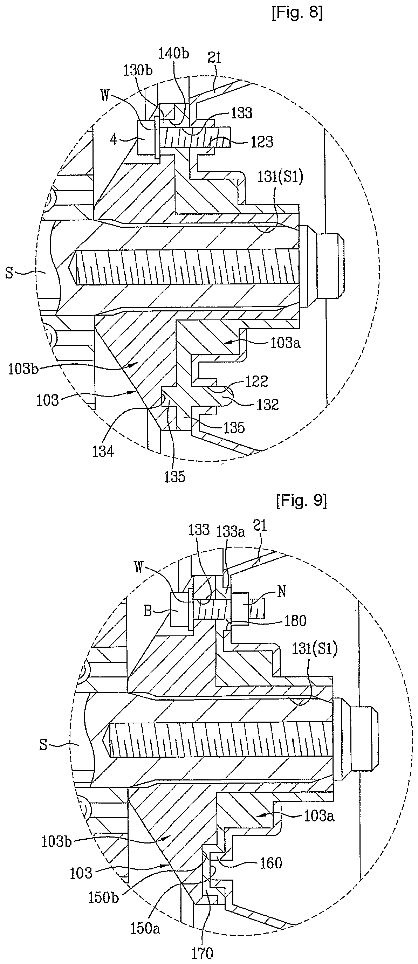

FIG. 7 illustrates a third preferred embodiment of the present invention, and FIG. 8 illustrates an enlarged view of the 'A'part in FIG. 7.

Referring to FIG. 8, the washing shaft supporting member 103 includes a serration 131 for placing in, and securing the washing shaft 'S' thereto, a supporting portion 103b of metal on an outer side of the serration 131 in a radial direction having a fastening portion for being fastened to a rotor frame 21, and an insulating portion for electric insulation between the supporting portion 103b and the rotor frame 21.

As shown, the insulating portion is an insulating gasket 103a separate from the supporting portion 103b for insulation between the rotor frame 21 and the supporting portion 103b and a fastening member 4 and the supporting portion 103b.

Of course, the gasket 103a may, or may not be formed as one body with the supporting portion 103b.

The gasket 103a includes coupling projections 132 formed as one body with the gasket 103a, and projected therefrom toward the rotor frame 21, and mounting projections 135 projected from the gasket 103a in conformity with mounting holes 134 in the supporting portion 103b.

The gasket 103a includes a boss 130b passed through a through-passed hole 140b in the supporting portion 103b for insulation between the fastening members 4 and the supporting portion 103b.

In the meantime, the rotor frame 21 has coupling holes 122 in conformity with the coupling projections 132 of the washing shaft supporting member 103.

Moreover, the rotor frame 21 has fastening holes 123 in correspondence to through-passed holes 133 in the washing shaft supporting member 103. The fastening holes 123 are formed by projected bosses at the time of pressing the rotor frame, and each of the fastening hole 123 has threads on an inside circumferential surface.

Placed between a head of each of the fastening members 4 and a face surface of an entrance of each of the through-passed holes 133 in the washing shaft supporting member 103, there is an insulating washer 'W'. Of course, the insulating washer 'W'may be emitted if an area of the boss 130b is adequate.

The serration 131 is formed on an inside surface of a hollow cylindrical column.

The supporting portion 103b or the gasket 103a has a disk shape substantially, but the shape of the supporting portion is not necessarily limited to the disk shape.

The operation of above structure will be described.

When the washing shaft supporting member 103 is mounted on the rotor frame, the coupling projections 132 on the gasket 103a are placed in the coupling holes 122 in hubs of the rotor frame, until the gasket 103a comes close to an inside surface of the rotor frame 21.

Then, the supporting portion 103b is mounted on the gasket 103a.

In this instance, the mounting is carried out such that the mounting projections 135 on the gasket 103a are fit into the mounting holes 134 in the supporting portion 103b, and the bosses 130b on the gasket 103a are positioned on an insides of each of the through-passed hole 140b.

In this state, the fastening members 4 are passed through the through-passed holes 133 in the bosses 130b respectively, and fastened to the fastening holes 123 respectively, to finish coupling of the washing shaft supporting member 103 to the rotor frame 21, rigidly.

By including the gasket 103a as an insulating portion, even if a current flows to the rotor frame 21, no current flows to the washing shaft 'S'

That is, the embodiment can protect user by forming the washing shaft supporting member as separate pieces of metal and plastic(or resin), both to reinforce strength and provide an insulating capability on the whole, to cut off current from transmitting to the washing shaft 'S'even if a current flows to the rotor frame 21, thereby preventing accidents caused by negligence of safety from occurring.

In more detail, even if insulation of the coil portion of the stator 1 and the rotor frame 21 of the rotor 2 are broken, leading a current to flow to the rotor frame 21, because the insulating gasket 103a is between the rotor frame 21 and the supporting portion of metal, and the insulating washer 'W' and the bosses 130b of the insulating gasket are also between the fastening members 4 and the supporting portion 103b of metal, to insulate the rotor frame from the washing shaft electrically, the electrical accidents caused by negligence of safety which can occur as a current flows to the washing shaft can be prevented.

Moreover, since the insulating gasket 103a had an effect of damping vibration, the vibration and noise coming from the motor can be reduced.

In the meantime, FIG. 9 illustrates another preferred embodiment, in which the insulating gasket 103a has bosses 133a for shielding contact, to insulate, between the bolts 'B'placed in the fastening holes 180 in the rotor frame and nuts 'N'fastened thereto, and the rotor frame 21.

In the meantime, on the other side of the rotor frame 21, there are positioning bosses 160, and the gasket 103a has projections 170 each having a positioning hole 150a for receiving the positioning boss 160, and the supporting portion 103b has holes 150b for receiving the projections 170 on the gasket 103a.

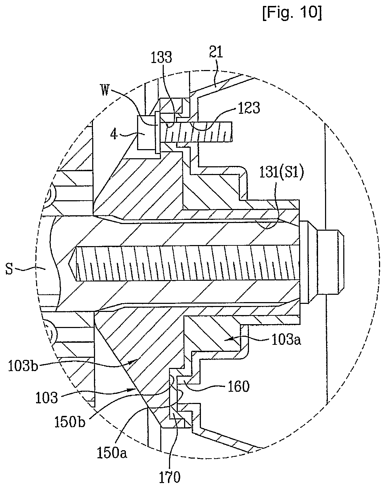

FIG. 10 illustrates another preferred embodiment, in which the fastening holes 123 in the rotor frame 21 are formed in a direction opposite to the embodiment shown in FIG. 8.

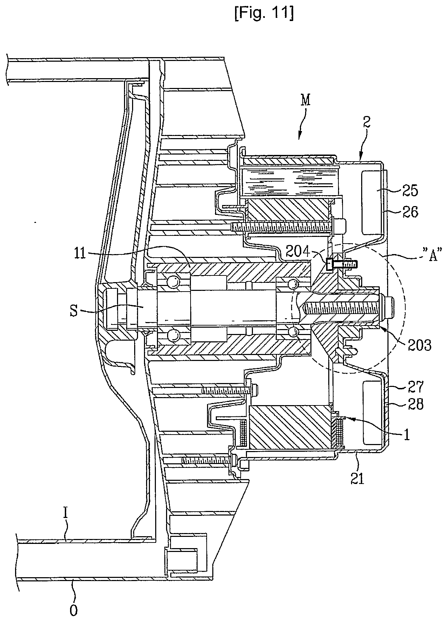

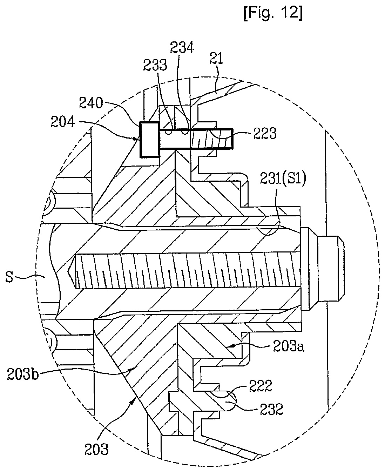

FIG. 11 illustrates a structure of a driving unit in a washing machine having another preferred embodiment of the present invention applied thereto, and FIG. 12 illustrates an enlarged view of the 'A'part in FIG. 11.

Referring to FIGS. 11 and 12, the washing shaft supporting member 203 includes a serration 231 for placing in, and securing the washing shaft thereto, a supporting portion 203b of metal on an outer side of the serration 231 in a radial direction having through-passed holes 233 for being fastened to a rotor frame 21, and an insulating portion for insulation between the supporting portion 203b and the rotor frame 21.

The insulating portion is a piece separate from the supporting portion 203b, constructed of an insulating gasket 203a having through-passed holes 234 in correspondence to the through-passed holes 233 and the fastening holes 223 in the supporting portion.

Insulating fastening members 204, are passed through the through-passed holes 233, and 234 in the supporting portion 203b and the insulating gasket 203a, and fastened to the fastening holes 223 in the rotor frame 21.

The insulating gasket 203a further includes coupling projections 232 projected toward the rotor frame 21 as one body, and the rotor frame 21 has coupling holes 222 in conformity with the coupling projections 232 on the insulating gasket 203a.

The insulating fastening member 204 may be, for an example, a metal bolt having an insulating coating layer 240 of plastic(or resin) applied to an outside surface thereof, or may be formed of plastic(or resin) entirely.

In the meantime, the supporting portion 203b or the insulating gasket 203a has a disk shape in a plan view, but the shape of the supporting portion 203b or the insulating gasket 203a is not limited to the disk shape.

The operation of the structure will be described.

At the time of mounting the washing shaft supporting member 203 to the rotor frame 21, the coupling projections 232 are placed in the coupling holes 222 in hubs of the rotor frame 21, until the gasket 203a comes close to an inside surface of the rotor frame 21.

In this state, the supporting portion 203b is fitted into the gasket 203a, and the fastening members 204 are passed through the through-passed holes 233, and 234 in the supporting portion 203b and the gasket 203a, and fastened to the fastening holes 223 respectively, thereby coupling the washing shaft supporting member 203 to the rotor frame 21, rigidly.

In this instance, referring to FIG. 11, the washing shaft 'S' is not in contact with the rotor frame 21 owing to the gasket 203a, and is cut off from an only indirect connection passage owing to the fastening members 204, such that even if a current flows to the rotor frame 21, no current flows to the washing shaft 'S'

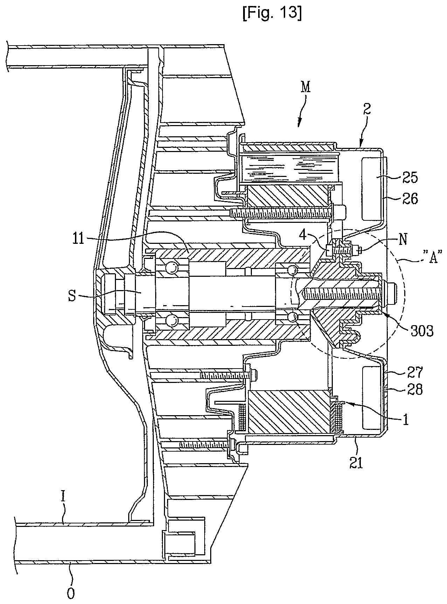

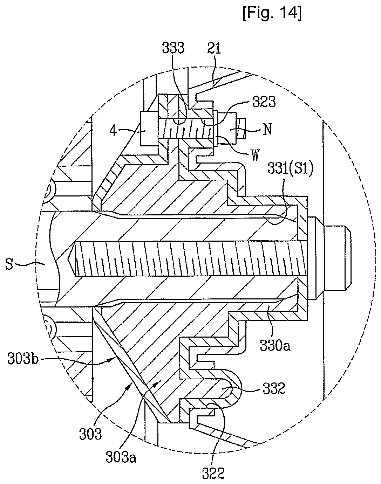

FIG. 13 illustrates a structural diagram of a driving unit in a drum type washing machine having another preferred embodiment of the present invention applied thereto, and FIG. 14 illustrates an enlarged view of the 'A'part in FIG. 13.

Referring to FIG. 14, a washing shaft supporting portion 303 in the embodiment includes a shaft securing portion 330a for securing the washing shaft thereto, a supporting portion 303a of metal on an outer side of the shaft securing portion 330a in a radial direction having through-passed holes 333 for coupling to the rotor frame 21, and an insulating portion 303b covered on a surface of the supporting portion 303a for electric insulation between the rotor frame 21 and the washing shaft.

The insulating portion 303b further includes coupling projections 332 projected toward the rotor frame 21 as one body with the insulating portion 303b.

In this instance, it is preferable that the insulating portion 303b is formed as one body with the supporting portion 303a by insert molding process with the supporting portion as an insert in the mold.

In the meantime, the rotor frame 21 has coupling holes 322 in correspondence to the coupling projections 332 on the washing shaft supporting member 303.

The rotor frame 21 has fastening holes 323 in correspondence to the through-passed holes333in the washing shaft supporting member 303.

In the meantime, if required, insulating washers 'W' may be placed between a face of each of the fastening holes in the supporting portion 303a and the fastening member fastened thereto, for preventing a current from flowing through the metal bolt.

As has been described, the embodiment has the following advantages.

The coupling projections 332 are placed in the coupling holes 322 in the hubs of the rotor frame 21, and the washing shaft supporting member 303 is put close to an inside surface of the rotor frame 21.

In this state, the fastening members 4 are passed through the through-passed holes 333 in the washing shaft supporting member, and fastened to the fastening holes 323 respectively, thereby coupling the washing shaft supporting member to the rotor frame 21, rigidly.

In this instance, referring to FIG. 13, the washing shaft 'S' can not communicate with the rotor frame 21 electrically owing to the insulating portion 303b of an insulating material. According to this, even if a current flows to the rotor frame, the current does not flow to the washing shaft 'S'

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

### Industrial Applicability

The present invention relates to motors each having a rotor with a metal rotor frame, a metal rotation shaft, and a rotation shaft supporting member connected between the rotor frame and the rotation shaft for transmission of a rotating power from the rotor to the rotation shaft, and, more particularly, to a motor in which the rotation shaft supporting member is constructed of a metal and an insulating material, for insulating the rotation shaft from the rotor frame while enhancing a structural strength of the rotation shaft supporting member.

The present invention permits to prevent accidents caused by negligence of safety from occurring by electrically insulating a rotation shaft-a washing shaft in a case of a direct coupling motor in a washing machine-from a rotor frame, to cut off transmission of a current to the rotation shaft even if an insulation between a coil portion of a stator and the rotor frame of the rotor in a motor is broken.

Moreover, the supporting member of metal and the folded structure of the fastening portion permit to enhance strength and rigidity of the washing shaft supporting member while saving material.

In the meantime, the reduction of vibration of the rotor frame owing to the insulating portion permits to reduce vibration and noise, to improve reliability of user on the product.

## Claims

1. A motor for preventing current leakage to a rotation shaft, having a rotor (2) with a rotor frame (21) of metal, a rotation shaft (S) of metal, and a rotation shaft supporting member (3) connected between the rotor frame (21) and the rotation shaft (S) to transmit a rotation power from the rotor (2) to the rotation shaft (S), the rotation shaft supporting member (3) comprising:
a supporting portion (3a) of metal for receiving and supporting the rotation shaft (S),
**characterized in that** an insulating portion (7) is formed between the rotation shaft (S) and the supporting portion (3a) and surrounds a portion of the rotation shaft (S) which is received by the supporting portion (3a) so as to electrically insulate the rotation shaft (S) from the supporting portion (3a) and the rotor frame (21).

2. A direct coupling type motor in a washing machine for preventing current leakage to a rotation shaft (S) as claimed in claim 1, wherein the rotation shaft (S) becomes a washing shaft (S) coupled to an inner tub (I) of the washing machine for rotating the inner tub (I).

3. The motor as claimed in claim 1 or 2, wherein the insulating portion (7) is formed as one body with the rotation shaft (S) or the supporting portion (3a).

4. The motor as claimed in any one of claims 1 to 3, wherein the rotation shaft supporting member (3) further comprises a coupling portion (3b) for being fastened to the rotor frame (21), wherein the coupling portion (3b) is extended from the supporting portion (3 a) in a radial direction and folded in a circumferential direction.

5. The motor as claimed in claim 4, wherein the rotor frame (21) has coupling holes (22), and the coupling portion (3b) has coupling projections (32) for placing in the coupling holes (22) respectively.

6. The motor as claimed in any one of claims 1 to 5, wherein the insulating portion (7) is made of plastic, and has a tube shape.

7. The motor as claimed in any one of claims 1 to 6, wherein the insulating portion (7) is formed around the rotation shaft (S) or the supporting portion (3a) by insert molding process with the rotation shaft (S) or the supporting portion (3a) as an insert.

8. The motor as claimed in claim 6, wherein the insulating portion (7) has an inside surface and an outside surface each with a serrate section, the rotation shaft (S) has an outside surface with a serrate section in correspondence to the serrate section on the inside surface of the insulating portion (7), and the supporting portion (3a) has an inside surface also with a serrate section in correspondence to the serrate section on the outside surface of the insulating portion (7).

9. A motor for preventing current leakage to a rotation shaft, having a rotor (2) with a rotor frame (21) of metal, a rotation shaft (S) of metal, and a rotation shaft supporting member (103, 203, 303) connected between the rotor frame (21) and the rotation shaft (S) to transmit a rotation power from the rotor (2) to the rotation shaft (S), the rotation shaft supporting member (103, 203, 303) comprising:
a supporting portion (103b, 203b, 303a) of metal for receiving and supporting the rotation shaft (S),
wherein an insulating portion (103a, 203a, 303b) is formed between the supporting portion (103b, 203b, 303a) and the rotor frame (21),
**characterized in that** the supporting portion (103b, 203b, 303a) and the rotor frame (21) are fastened together with fastening members (4), and
the fastening members (4) have an electric insulating property or are insulated from the supporting portion (103b) or the rotor frame (21) by positioning the insulating portion (103a) between the fastening members (4) and the supporting portion (103b) or the rotor frame (21).

10. The motor as claimed in claim 9, wherein the insulating portion (103a, 203a, 303b) is made of plastic and positioned between the supporting portion (103b, 203b, 303a) and the rotor frame (21), by being formed around the supporting portion (103b, 203b, 303a) by insert molding process with the supporting portion (103b, 203b, 303a) as an insert.

11. The motor as claimed in claim 9 or 10, wherein the insulating portion (103a, 203a, 303b) is positioned between the supporting portion (103b, 203b, 303a) and the rotor frame (21) by being assembled to the supporting portion (103b, 203b, 303a).

12. The motor as claimed in claim 11, wherein the supporting portion (103b) has mounting holes (134) and the insulating portion (103a) has mounting projections (135) corresponding to the mounting holes (134).

13. The motor as claimed in any one of claims 9 to 12, wherein the rotor frame (21) has through-passed holes for placing bolts therein as the fastening members (4) for fastening the rotor frame (21) to the rotation shaft supporting member (103), and the insulating portion (103a) is formed to cover an inside surface of the through-passed holes for preventing the bolts from coming into electric contact with the inside surface of the through-passed holes.

14. The motor as claimed in any one of claims 9 to 12, wherein the supporting portion (103b) has through-passed holes (133) for placing in bolts as the fastening members (4) for fastening the rotor frame (21) to the rotation shaft supporting member (103), and the insulating portion (103a) is formed to cover an inside surface of the through-passed holes (133) for preventing the bolts from coming into electric contact with the inside surface of the through-passed holes (133).

15. The motor as claimed in any one of claims 9 to 14, wherein the fastening member (4) includes a bolt of metal having a layer of coating of an insulating material applied thereto.

16. The motor as claimed in any one of claims 9 to 14, wherein the fastening member (4) includes a bolt of an insulating material.

17. The motor as claimed in any one of claims 9 to 16, wherein the rotor frame (21) has coupling holes (122, 222, 322) and the insulating portion (103a, 203a, 303b) has coupling projections (132, 232, 332) in correspondence to the coupling holes (122, 222, 322).

18. The motor as claimed in claim 14, further comprising an insulating washer (W) between a head of the bolt and the supporting portion (103b).

## Patentansprüche

1. Motor zum Verhindern von Leckstrom zu einer Drehwelle, der einen Läufer (2) mit einem Läuferrahmen (21) aus Metall, eine Drehwelle (S) aus Metall und ein Drehwellen-Stützbauteil (3) hat, das zwischen dem Läuferrahmen (21) und der Drehwelle (S) verbunden ist, um eine Drehkraft vom Läufer (2) zur Drehwelle (S) zu übertragen, wobei das Drehwellen-Stützbauteil (3) aufweist:
einen Stützabschnitt (3a) aus Metall zum Aufnehmen und Stützen der Drehwelle (S),
**dadurch gekennzeichnet, dass** ein Isolierabschnitt (7) zwischen der Drehwelle (S) und dem Stützabschnitt (3a) gebildet ist und einen Abschnitt der Drehwelle (S) umgibt, der durch den Stützabschnitt (3a) aufgenommen ist, um die Drehwelle (S) vom Stützabschnitt (3a) und Läuferrahmen (21) elektrisch zu isolieren.

2. Direkt gekoppelter Motor in einer Waschmaschine zum Verhindern von Leckstrom zu einer Drehwelle (S) nach Anspruch 1, wobei die Drehwelle (S) zu einer Waschwelle (S) wird, die mit einem Innenbottich (I) der Waschmaschine zum Drehen des Innenbottichs (I) gekoppelt ist.

3. Motor nach Anspruch 1 oder 2, wobei der Isolierabschnitt (7) in einem Stück mit der Drehwelle (S) oder dem Stützabschnitt (3a) gebildet ist.

4. Motor nach einem der Ansprüche 1 bis 3, wobei das Drehwellen-Stützbauteil (3) ferner einen Koppelabschnitt (3b) zum Befestigen am Läuferrahmen (21) aufweist, wobei sich der Koppelabschnitt (3b) vom Stützabschnitt (3a) in Radialrichtung erstreckt und in Umfangsrichtung gefaltet ist.

5. Motor nach Anspruch 4, wobei der Läuferrahmen (21) Koppellöcher (22) hat und der Koppelabschnitt (3b) Koppelvorsprünge (32) zum jeweiligen Platzieren in den Koppellöchern (22) hat.

6. Motor nach einem der Ansprüche 1 bis 5, wobei der Isolierabschnitt (7) aus Kunststoff hergestellt ist und eine Rohrform hat.

7. Motor nach einem der Ansprüche 1 bis 6, wobei der Isolierabschnitt (7) um die Drehwelle (S) oder den Stützabschnitt (3a) durch ein Einsatzformverfahren mit der Drehwelle (S) oder dem Stützabschnitt (3a) als Einsatz gebildet ist.

8. Motor nach Anspruch 6, wobei der Isolierabschnitt (7) eine Innenfläche und eine Außenfläche mit jeweils einem kerbverzahnten Teilstück hat, die Drehwelle (S) eine Außenfläche mit einem kerbverzahnten Teilstück in Entsprechung zum kerbverzahnten Teilstück auf der Innenfläche des Isolierabschnitts (7) hat und der Stützabschnitt (3a) eine Innenfläche auch mit einem kerbverzahnten Teilstück in Entsprechung zum kerbverzahnten Teilstück auf der Außenfläche des Isolierabschnitts (7) hat.

9. Motor zum Verhindern von Leckstrom zu einer Drehwelle, der einen Läufer (2) mit einem Läuferrahmen (21) aus Metall, eine Drehwelle (S) aus Metall und ein Drehwellen-Stützbauteil (103, 203, 303) hat, das zwischen dem Läuferrahmen (21) und der Drehwelle (S) verbunden ist, um eine Drehkraft vom Läufer (2) zur Drehwelle (S) zu übertragen, wobei das Drehwellen-Stützbauteil (103, 203, 303) aufweist:
einen Stützabschnitt (103b, 203b, 303a) aus Metall zum Aufnehmen und Stützen der Drehwelle (S),
wobei ein Isolierabschnitt (103a, 203a, 303b) zwischen dem Stützabschnitt (103b, 203b, 303a) und dem Läuferrahmen (21) gebildet ist,
**dadurch gekennzeichnet, dass** der Stützabschnitt (103b, 203b, 303a) und der Läuferrahmen (21) mit Befestigungsbauteilen (4) aneinander befestigt sind und die Befestigungsbauteile (4) ein elektrisches Isoliervermögen haben oder vom Stützabschnitt (103b) oder Läuferrahmen (21) durch Positionieren des Isolierabschnitts (103a) zwischen den Befestigungsbauteilen (4) und dem Stützabschnitt (103b) oder dem Läuferrahmen (21) isoliert sind.

10. Motor nach Anspruch 9, wobei der Isolierabschnitt (103a, 203a, 303b) aus Kunststoff hergestellt und zwischen dem Stützabschnitt (103b, 203b, 303a) und dem Läuferrahmen (21) positioniert ist, indem er um den Stützabschnitt (103b, 203b, 303a) durch ein Einsatzformverfahren mit dem Stützabschnitt (103b, 203b, 303a) als Einsatz gebildet ist.

11. Motor nach Anspruch 9 oder 10, wobei der Isolierabschnitt (103a, 203a, 303b) zwischen dem Stützabschnitt (103b, 203b, 303a) und dem Läuferrahmen (21) positioniert ist, indem er mit dem Stützabschnitt (103b, 203b, 303a) zusammengebaut ist.

12. Motor nach Anspruch 11, wobei der Stützabschnitt (103b) Anbaulöcher (134) hat und der Isolierabschnitt (103a) Anbauvorsprünge (135) hat, die den Anbaulöchern (134) entsprechen.

13. Motor nach einem der Ansprüche 9 bis 12, wobei der Läuferrahmen (21) Durchgangslöcher zum Platzieren von Schrauben als Befestigungsbauteile (4) darin zum Befestigen des Läuferrahmens (21) am Drehwellen-Stützbauteil (103) hat und der Isolierabschnitt (103a) so gebildet ist, dass er eine Innenfläche der Durchgangslöcher abdeckt, um zu verhindern, dass die Schrauben mit der Innenfläche der Durchgangslöcher in elektrischen Kontakt kommen.

14. Motor nach einem der Ansprüche 9 bis 12, wobei der Stützabschnitt (103b) Durchgangslöcher (133) zum Platzieren von Schrauben als Befestigungsbauteile (4) darin zum Befestigen des Läuferrahmens (21) am Drehwellen-Stützbauteil (103) hat und der Isolierabschnitt (103a) so gebildet ist, dass er eine Innenfläche der Durchgangslöcher (133) abdeckt, um zu verhindern, dass die Schrauben mit der Innenfläche der Durchgangslöcher (133) in elektrischen Kontakt kommen.

15. Motor nach einem der Ansprüche 9 bis 14, wobei das Befestigungsbauteil (4) eine Schraube aus Metall mit einer Auftragsschicht aus einem Isoliermaterial hat, das darauf aufgetragen ist.

16. Motor nach einem der Ansprüche 9 bis 14, wobei das Befestigungsbauteil (4) eine Schraube aus einem Isoliermaterial aufweist.

17. Motor nach einem der Ansprüche 9 bis 16, wobei der Läuferrahmen (21) Koppellöcher (122, 222, 322) hat und der Isolierabschnitt (103a, 203a, 303b) Koppelvorsprünge (132, 232, 332) in Entsprechung zu den Koppellöchern (122, 222, 322) hat.

18. Motor nach Anspruch 14, ferner mit einer Isolierscheibe (W) zwischen einem Kopf der Schraube und dem Stützabschnitt (103b).

## Revendications

1. Moteur permettant d'empêcher une fuite de courant vers un arbre de rotation, ayant un rotor (2) avec un cadre de rotor (21) en métal, un arbre de rotation (S) en métal, et un organe de support d'arbre de rotation (3) raccordé entre le cadre de rotor (21) et l'arbre de rotation (S) pour transmettre une puissance de rotation du rotor (2) à l'arbre de rotation (S), l'organe de support d'arbre de rotation (3) comprenant :
une portion de support (3a) en métal permettant de recevoir et supporter l'arbre de rotation (S),
**caractérisé en ce qu'**une portion isolante (7) est formée entre l'arbre de rotation (S) et la portion de support (3a) et entoure une portion de l'arbre de rotation (S) qui est reçue par la portion de support (3a) de manière à isoler électriquement l'arbre de rotation (S) de la portion de support (3a) et du cadre de rotor (21).

2. Moteur de type à couplage direct dans une machine à laver permettant d'empêcher une fuite de courant vers un arbre de rotation (S) selon la revendication 1, dans lequel l'arbre de rotation (S) devient un arbre de lavage (S) couplé à une cuve interne (I) de la machine à laver permettant de mettre en rotation la cuve interne (I).

3. Moteur selon la revendication 1 ou 2, dans lequel la portion isolante (7) est formée d'un seul tenant avec l'arbre de rotation (S) ou la portion de support (3a).

4. Moteur selon l'une quelconque des revendications 1 à 3, dans lequel l'organe de support d'arbre de rotation (3) comprend en outre une portion de couplage (3b) permettant d'être arrimée au cadre de rotor (21), dans lequel la portion de couplage (3b) s'étend depuis la portion de support (3a) dans une direction radiale et est pliée dans une direction circonférentielle.

5. Moteur selon la revendication 4, dans lequel le cadre de rotor (21) a des trous de couplage (22), et la portion de couplage (3b) a des saillies de couplage (32) permettant le placement dans les trous de couplage (22), respectivement.

6. Moteur selon l'une quelconque des revendications 1 à 5, dans lequel la portion isolante (7) est faite de plastique, et a une forme de tube.

7. Moteur selon l'une quelconque des revendications 1 à 6, dans lequel la portion isolante (7) est formée autour de l'arbre de rotation (S) ou de la portion de support (3a) par un processus de moulage d'insert avec l'arbre de rotation (S) ou la portion de support (3a) sous forme d'insert.

8. Moteur selon la revendication 6, dans lequel la portion isolante (7) a une surface intérieure et une surface extérieure chacune avec une section dentelée, l'arbre de rotation (S) a une surface extérieure avec une section dentelée en correspondance de la section dentelée sur la surface intérieure de la portion isolante (7), et la portion de support (3a) a une surface intérieure également avec une section dentelée en correspondance de la section dentelée sur la surface extérieure de la portion isolante (7).

9. Moteur permettant d'empêcher une fuite de courant vers un arbre de rotation, ayant un rotor (2) avec un cadre de rotor (21) en métal, un arbre de rotation (S) en métal, et un organe de support d'arbre de rotation (103, 203, 303) raccordé entre le cadre de rotor (21) et l'arbre de rotation (S) pour transmettre une puissance de rotation du rotor (2) à l'arbre de rotation (S), l'organe de support d'arbre de rotation (103, 203, 303) comprenant :
une portion de support (103b, 203b, 303a) en métal permettant de recevoir et supporter l'arbre de rotation (S),
dans lequel une portion isolante (103a, 203a, 303b) est formée entre la portion de support (103b, 203b, 303a) et le cadre de rotor (21),
**caractérisé en ce que** la portion de support (103b, 203b, 303a) et le cadre de rotor (21) sont arrimés conjointement avec des organes d'arrimage (4), et
les organes d'arrimage (4) ont une propriété d'isolation électrique ou sont isolés de la portion de support (103b) ou du cadre de rotor (21) par positionnement de la portion isolante (103a) entre les organes d'arrimage (4) et la portion de support (103b) ou le cadre de rotor (21).

10. Moteur selon la revendication 9, dans lequel la portion isolante (103a, 203a, 303b) est constituée de plastique et positionnée entre la portion de support (103b, 203b, 303a) et le cadre de rotor (21), en étant formée autour de la portion de support (103b, 203b, 303a) par un processus de moulage d'insert avec la portion de support (103b, 203b, 303a) sous forme d'insert.

11. Moteur selon la revendication 9 ou 10, dans lequel la portion isolante (103a, 203a, 303b) est positionnée entre la portion de support (103b, 203b, 303a) et le cadre de rotor (21) en étant assemblés à la portion de support (103b, 203b, 303a).

12. Moteur selon la revendication 11, dans lequel la portion de support (103b) a des trous de montage (134) et la portion isolante (103a) a des saillies de montage (135) correspondant aux trous de montage (134).

13. Moteur selon l'une quelconque des revendications 9 à 12, dans lequel le cadre de rotor (21) a des trous traversants permettant d'y placer des boulons en tant qu'organes d'arrimage (4) permettant d'arrimer le cadre de rotor (21) à l'organe de support d'arbre de rotation (103), et la portion isolante (103a) est formée pour couvrir une surface intérieure des trous traversants permettant d'empêcher les boulons d'entrer en contact électrique avec la surface intérieure des trous traversants.

14. Moteur selon l'une quelconque des revendications 9 à 12, dans lequel la portion de support (103b) a des trous traversants (133) permettant de placer des boulons en tant qu'organes d'arrimage (4) permettant d'arrimer le cadre de rotor (21) à l'organe de support d'arbre de rotation (103), et la portion isolante (103a) est formée pour couvrir une surface intérieure des trous traversants (133) permettant d'empêcher les boulons d'entrer en contact électrique avec la surface intérieure des trous traversants (133).

15. Moteur selon l'une quelconque des revendications 9 à 14, dans lequel l'organe d'arrimage (4) inclut un boulon en métal auquel est appliquée une couche de revêtement en matériau isolant.

16. Moteur selon l'une quelconque des revendications 9 à 14, dans lequel l'organe d'arrimage (4) inclut un boulon en matériau isolant.

17. Moteur selon l'une quelconque des revendications 9 à 16, dans lequel le cadre de rotor (21) a des trous de couplage (122, 222, 322) et la portion isolante (103a, 203a, 303b) a des saillies de couplage (132, 232, 332) en correspondance des trous de couplage (122, 222, 322).

18. Moteur selon la revendication 14, comprenant en outre une rondelle isolante (W) entre une tête du boulon et la portion de support (103b).
